Europäisches Patentamt

European Patent Office

Office européen des brevets

(11) Publication number: **0 227 423 B1**

# EUROPEAN PATENT SPECIFICATION

(45) Date of publication of patent specification: **03.06.92**    (51) Int. Cl.⁵: **C09D 11/00**, B05D 5/06, C09D 7/12

(21) Application number: **86309838.0**

(22) Date of filing: **16.12.86**

(54) **Optical thin film flakes, replicated optical coatings and coatings and inks incorporating the same and method.**

(30) Priority: **23.12.85 US 812814**

(43) Date of publication of application:
**01.07.87 Bulletin 87/27**

(45) Publication of the grant of the patent:
**03.06.92 Bulletin 92/23**

(84) Designated Contracting States:
**AT BE CH DE ES FR GB GR IT LI LU NL SE**

(56) References cited:
**EP-A- 0 170 439**
**DE-A- 1 242 778**
**GB-A- 978 200**
**US-A- 4 434 010**

**CHEMICAL ABSTRACTS, vol. 100, no. 20, 14th May 1984, page 92, abstract no. 158265h, Columbus, Ohio, US; & JP-A-58 203 039 (OIKE AND CO., LTD) 26-11-1983**

**POLYMERS PAINT AND COLOUR JOURNAL, vol. 169, 1979, pages 38-44; C.J. REIGER: "Use of non-metallic pearlescent pigments to achieve metallic appearance"**

(73) Proprietor: **FLEX PRODUCTS, INC.**
**2789 Northpoint Parkway Building D**
**Santa Rosa California 95402-7397(US)**

(72) Inventor: **Phillips, Roger W.**
**466 Jacqueline Drive**
**Santa Rosa California 95401(US)**
Inventor: **Mayer, Thomas**
**8 Lantern Lane,Honeoye Falls**
**New York 14472(US)**
Inventor: **Ash, Gary S.**
**23 Braddock Road**
**Boston Massachusetts 02116(US)**

(74) Representative: **Bayliss, Geoffrey Cyril et al**
**BOULT, WADE & TENNANT 27 Furnival Street**
**London EC4A 1PO(GB)**

## Description

This invention relates to optical thin film flakes and coatings and inks incorporating the same and a method for making the same and more particularly to optically variable thin film flakes and inks incorporating the same used in anti-counterfeiting applications.

In the past attempts have been made to make lamellar pigment materials in the manner disclosed in US-A-4168986 with the desire to obtain improved specular reflectivity. In US-A-4434010 there is disclosed an article and method for forming thin film flakes and coatings. There is, however, no discosure as to how optically variable thin film flakes for incorporation into paints and inks can be produced which incorporate the use of subtractive colorants to block out or minimize undesired colors. There is therefore a need for new and improved optically variable thin film flakes, paints and inks incorporating the same and methods for producing the same.

This invention provides an optically variable coating for providing a colour shift between two distinct colours at first and second angles of incident light, comprising a liquid vehicle and optically variable flakes disposed in the liquid vehicle, each of the optically variable flakes being comprised of a multilayer thin film structure having first and second planar surfaces extending parallel to the planes of the layers of the film structure, and a thickness which is measured in a direction perpendicular to the layers of the film structure; wherein the flakes have an aspect ratio of at least 2 to 1, between the largest dimension of said flakes parallel to the planes of the layers of the thin film structure and said thickness of the flakes perpendicular to the planes of the layers, the flakes being of symmetrical design and including metal reflector layers each having at least one period disposed on each surface thereof, each period being comprised of a layer with an index of refraction of 1.65 or less and a semi-opaque layer, and said flakes having a maximum dimension ranging from approximately 2 to 20 microns; and wherein the liquid vehicle in which the optically variable flakes are disposed is a liquid ink vehicle.

The invention also provides a method for producing an optically variable coating, providing a flexible web, depositing a release coat upon the flexible web, depositing an optically variable multilayer interference coating on the release coat, passing the web containing the release coat and the optically variable multilayer coating thereon into a solvent to dissolve the release coat, removing the optically variable multilayer coating from the web and causing the same to break into flakes having first and second parallel surfaces, drying the flakes, and dispensing the flakes in a liquid coating; wherein the flakes are subjected to an operation to reduce the size of the flakes so that the flakes have a maximum dimension ranging from approximately 2 to 20 microns and have an aspect ratio of at least 2 to 1 when measured in directions parallel and perpendicular to the first and second planer surfaces; and wherein the flakes are introduced into a liquid ink vehicle to form an optically variable ink.

The following is a description of some specific embodiments of the invention, reference being made to the accompanying drawings, in which:

Figure 1 is a flow chart showing the optically variable ink process.

Figure 2 is a flow chart showing the optically variable in manufacturing process.

Figure 3 is a graph showing the reflectance of a magenta-to-green shifter at l0 incidence.

Figure 4 is a graph showing the reflectance for a gold-to-green shifter at l0 incidence.

Figure 5 is a graph showing the reflectance of a gold-to-green shifter with and without a blue-light blocking pigment.

A process for making an optically variable ink (OVI) is shown in Figure I. As shown therein in a converting step 20I, the flexible web is coated with a solvent soluble polymer. The web is formed of a suitable insoluble flexible material using polyethyleneterphthalate (PET), or alternatively, using polymers such as polycarbonates and Kapton. By way of example, a l42 gauge polyester web can be utilized. The web is coated with an acrylic based polymer. One acrylic based polymer found to be satisfactory is one designated as 5I7-I and is manufactured and sold by Thermark Division of Avery International located at Schererville, Indiana. The acrylic based polymer is applied to the web in a suitable manner such as by gravure coating and dried in force air dryers. The polymer coat applied to the web is soluble in at least one solvent. Examples of suitable solvents are acetone and methethylketone. It should be appreciated that other than acrylic polymers, other materials can be utilized for a release layer. For example, instead of using a soluble hardcoat as provided by the acrylic polymer, it is possible to evaporate a thin film coating onto the web which would be soluble in certain liquids. Such a thin layer could be sodium fluoride or sodium chloride which could be dissolved with water. Also it should be appreciated that other release layers which have very low adhesion could be utilized which would permit mechanical removal of the optically variable thin film either by the use of a vacuum or by the use of air jets.

After the converting step 231 has been carried out, the flexible web can be placed in a vacuum coating chamber for performing the vacuum coating step consisting of depositing an optically variable device (OVD) or optical thin film onto the web as shown by step 202. The optical variable device can be an optical multilayer structure of the type hereinbefore described in US-A-4434010 or EP-A-0170439. Optically variable devices of this character can be deposited onto the web in a conventional manner in a vacuum chamber such as by the use of electron beam and resistive heating sources as well as by sputtering.

After the multilayer coating has been deposited on the flexible web, in the vacuum coating process, the soluble polymer layer and the adhering thin film which forms the optically variable device is stripped from the carrier web. This can be accomplished batch wise or in a continuous fashion as shown by step 203 by passing the web through a bath of a suitable solvent, such as acetone. As the soluble polymer layer is dissolved by the acetone, the thin film is separated from the web mechanically. As the thin film is being removed, it breaks into optical flakes which are of a size on the order of 50 to 200 microns. If a continuous process is being used, the web as it emerges from the solvent, can be engaged by a metal doctor blade to mechanically separate any remaining thin film from the web.

The optical flakes, after they have been removed from the carrier web either in a batch process or a continuous process are then reduced in size as hereinafter described and formulated into an ink as shown by step 203. Thereafter, the ink can be utilized in various printing processes as shown by step 204.

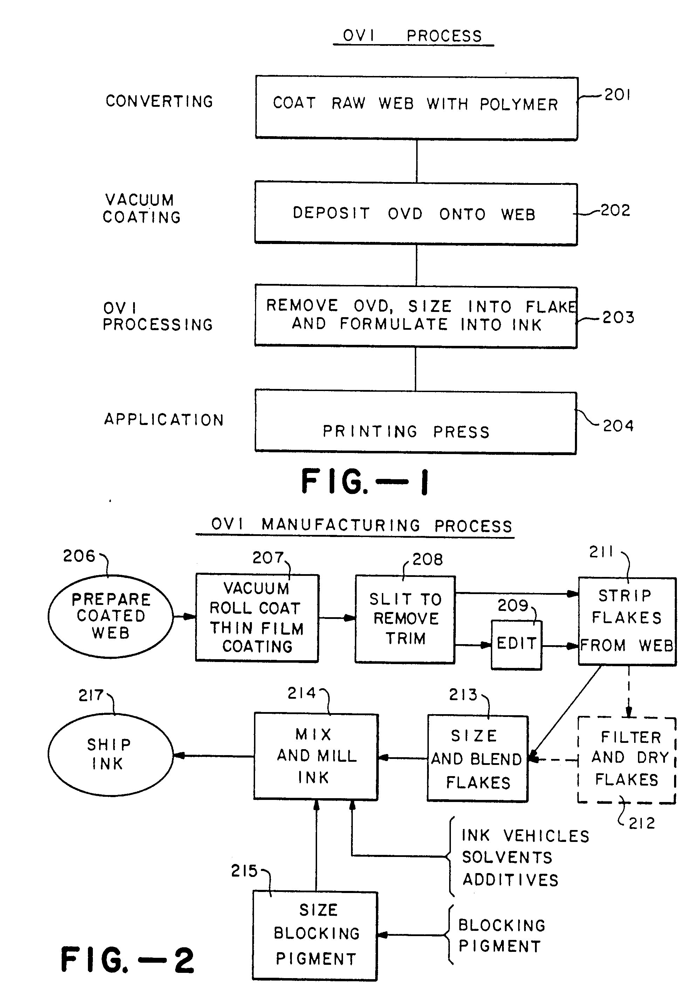

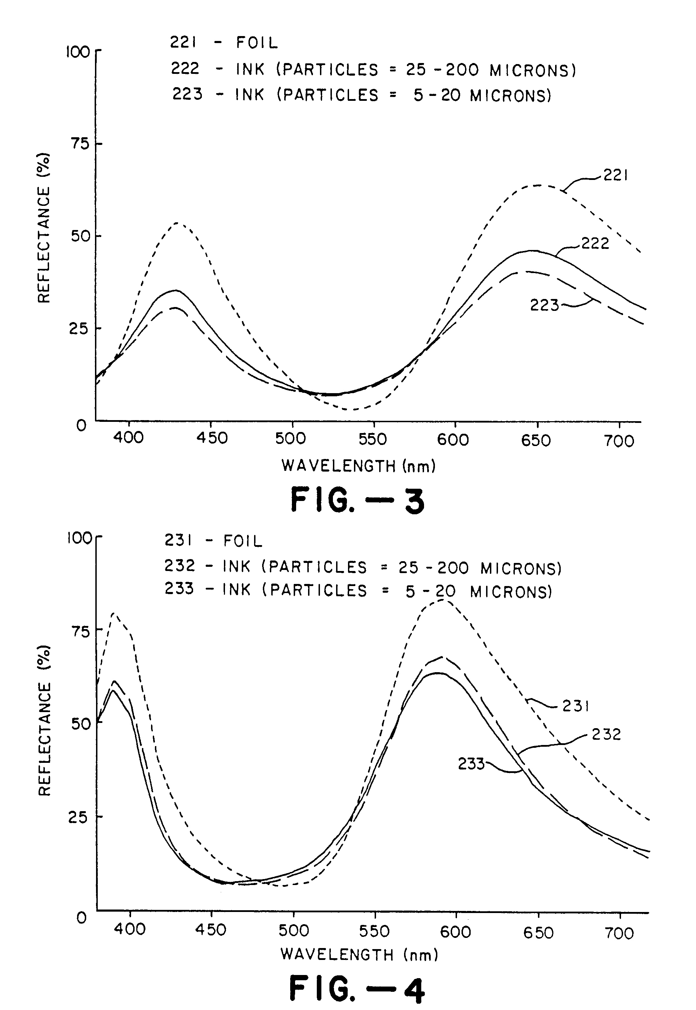

A more detailed manufacturing process for making optically variable ink from an optical variable device manufactured in the manner hereinbefore described is shown in Figure 2. As shown therein, the soluble polymer coated web or substrate is prepared in step 206 as hereinafter described. The coated web is then supplied to a vacuum roll coater in roll form as shown in the step 207. In the vacuum roll coater, a thin film multilayer coating can be applied over a given width using a single evaporation source with appropriate masking or can be applied to almost the full width of the vacuum roll coater using multiple evaporative sources and appropriate masking. After coating by vacuum evaporation, the web is removed from the roll coater and is slit to remove any defects or unwanted trim (edge non-uniformities).

During this editing process, the spectral properties of the thin film coating can be ascertained and supplied to a computer to provide a running color average of the coating. This makes it possible to modify the color at a later step as hereinafter described in the event that the color is slightly off the desired color for a particular roll. This makes it possible to custom blend to obtain an exact color by either adding a lower or a higher color. By having available a color profile extending along the width and length of the web, it is possible to ascertain the average color of each given roll. By way of example, if average dominant wave length of a roll is, for example, 495 microns and the desired wavelength is 490 microns, this desired wavelength can be obtained by adding some lower wavelength material having a wavelength of 485 microns to achieve the desired 490 microns.

In the next step 2ll, the thin film is stripped from the web. By way of example, this can be accomplished by taking the rolls and placing the rolls on an unwind roller and having the web pass through a solvent bath and then being taken up by a wind-up roller. The web as it passes through the solvent bath can pass through a series of rollers which are positioned below the level of the solvent bath. If any of the thin film coating still remains on the web as it emerges from the rollers in the bath, this remaining thin film can be removed by a metal doctor blade which scrapes the remaining thin film from the web. The doctor blade typically is positioned on the outside of the roll on the wind-up side so that any adhering flake will fall back into the solvent bath. As explained previously, the flakes in this operation have a tendency to drop off in sizes of approximately 50 to 200 microns.

The flakes as they fall from the web will fall to the bottom of the tank containing the solvent because they have a much higher specific gravity as, for example, approximately 3 whereas the solvent has a specific gravity of approximately l. After the settling has occurred, the clear solvent liquid above the flakes can be drained from the upper part of the tank containing the solvent. The flakes can then be removed from the tank and used as hereinafter described. Alternatively, the flakes with the remaining solvent can then be filtered and pulled dry as shown by step 212 by the use of a vacuum filter of a conventional type. Thereafter, fresh solvent is sprayed over the optically variable flakes forming the filter cake remaining in the filter to remove any last traces of the soluble polymer or other extraneous material from the flakes. The filter cake is then removed from the filter and broken up and then laid out to dry in an air oven at atmospheric pressure at a suitable temperature as, for example, 100 for a period of time ranging from approximately 8 to 10 hours as also shown by step 212.

After the flakes have been dried, they are placed in a suitable solvent solution, such as acetone or methanol and ultrasonically agitated using a conventional ultrasonic agitator as, for example, a Branson sonic dismembrator for a suitable period as, for example, approximately 1 hour to reduce the particle size to approximately 2-20 microns. Thereafter, the flakes are again filtered to remove the solvent and are air-dried in an atmospheric oven at a suitable temperature, as for example, 75 overnight or until they are dry.

3

In order to reduce the flakes to a still smaller size, as for example, a size ranging from 2 to 5 microns, the dried flakes are subjected to an air grind in a suitable impact pulverizer such as one manufactured by Garlock Plastomer Products, a division of Colt Industries on Friends Lane, Newton, Pennsylvania 18940. By way of example, a TX laboratory model of the air impact pulverizer has been utilized to grind alumina up to a rate of 8 pounds an hour using a 10 mesh feed to produce particle sizes down to sub micron size, as for example, 0.65 microns. It has been found by using this air impact pulverizer, 2 to 5 micron size can be readily achieved without destroying the color characteristics of the flakes. It should be appreciated that other grinding techniques can be utilized. However, care must be taken so that the grinding will not destroy the color characteristics of the flakes.

A particularly attractive feature of the air impact process for producing the small size optically variable thin film flakes is that an aspect ratio of at least 2 to 1 can be achieved, and a fairly narrow particle size distribution can be obtained. The aspect ratio is ascertained by taking the largest dimension of a surface of the flake parallel to the planes of the layers of the thin film and a surface (the thickness) perpendicular to the planes of the layers. In addition, the air impact process eliminates the need for additional solvent dispersal and solvent removal steps.

After the flakes have been sized, they can be blended with other flakes to achieve the exact color desired by adding flakes having a higher or lower wavelength to achieve the desired result. This sizing and blending process is represented by step 213 in Figure 2.

The sized and blended flakes are then introduced into an ink polymer vehicle which consists of a main vehicle with various additives in Step 214.

It should be appreciated that various types of ink vehicle systems can be utilized. For example, ultraviolet cured solvent systems, oxidative systems and catalytic systems can be utilized. One type of ink system which has been found to be satisfactory for use with the flakes is a catalytic system supplied by Dal Val Ink and Color, Inc. at 3101 Taylor's Lane, Riverton, New Jersey 08077 under the designations of 5-X-2575 and 5-X-2605. Another one found to be suitable is an epoxy based gravure ink supplied by Gotham Ink and Color Inc. of Long Island City, New York under Nos. 66908 and 66909.

In connection with optically variable inks, it may be desirable to add transparent dyes or pigments to the ink formulation to operate in a subtractive mode to modify the colors and/or to block unwanted colors For example, in the case of a gold-to-green shifter, the addition of yellow dyes or yellow transparent pigments blocks the blue. reflected light at large viewing angles by absorbing the undesired color. Blocking or subtractive pigments can be added as a separate overprint ink layer or can be mixed directly into the optically variable ink, as shown by step 214. By way of example, if yellow is the color to be utilized, various transparent yellow blocking pigments are available. For example, cromophtal yellow 3G (C. I. pigment yellow 93) can be ontained from the Pigments Department of Ciba-Geigy of Ardsley, New York 10502. Sunset Gold HR Transparent 1281 (C. I. pigment yellow 83) can be obtained from Harshaw company and Diarylide Yellow Toner AAOA-Transparent 1275 also can be obtained from Harshaw. 11-1405 Novoperm yellow HR Extra Transparent (C. I. pigment yellow 83) can be obtained from American Hoechst Corporation of Coventry, Rhode Island, as well as 11-1424 Novoperm yellow RH-02 and 11-1400 Novoperm yellow HR.

The yellow pigments are typically supplied in a yellow powder of a sub-micron size and are introduced into the ink as it is being mixed and milled to a percentage ranging from 2 to 30% by weight of the resulting optically variable ink. However, in order to achieve a brighter color it is desirable to utilize a lower percentage by weight of color, as for example, approximately 15%. The mixing and milling operation shown by step 214 is carried out to obtain good dispersion of the added pigment. It also causes good dispersion of the flakes which have been added to the paint vehicle. The mixed paint can then be packaged into desirable containers and shipped to the user as shown by step 217.

The optically variable ink produced in accordance with the present invention can be utilized with various conventional printing presses without modification of the presses. For example, the optically variable ink can be utilized in various printing processes, such as lithographic printing, letterpress printing, intaglio printing, gravure printing, screen printing, ink jet printing, and by electrostatic printing. Since the optically variable printing ink can be utilized with printing processes providing high resolution such as Intaglio, lithographic and relief printing, it can be utilized for producing security-type documents. As it is well known to those skilled in the art, the film thickness after it is applied as a wet film on full solid coated paper can have the following thicknesses:

| Process | Microns (approximate)* |
|---------|------------------------|
| Sheetfed Litho | 5.0 |
| Sheetfed Letterpress | 7.5 |
| Web Offset | 7.5 |
| Web Letterpress | 10 |
| Gravure (Intaglio) | 30 (variable) |
| Screen | 25-125 |

*from 'What The Printers Should Know About Ink' by T. Scarlett and N. Eldred, Graphic Arts Technical Foundation, Pittsburgh, Pa. 15213, 1984, p. 2.

From the above it can be seen that the gravure or the screen ink film thicknesses are greater and thus gives greater color saturation than with the thinner ink films.

The aspect ratio is important in that it helps to ensure that the flakes will land either on their top and bottom sides and not on their ends. It can be appreciated if the flakes fall on their ends, that there would be no color shift from the flake. It is important that the optical variable device be symmetrical so that no matter which side the flake lands on, it still will give a color shift. In other words, the color will be maintained. Thus it certainly is desirable not to have a one-to-one aspect ratio but rather be at least two-to-one or three-to-one. Since the total thickness of the optically variable thin film is approximately .9 microns, the 2 micron dimension is approximately the smallest dimension desired for the flakes. By utilizing an aspect ratio of at least 2 to l and greater, preferably 5-l0, to l, gives assurance that a major proportion of the flakes will land in the ink vehicle with an orientation such that the surfaces providing the color of the flakes will be facing upwardly since the thin film coating is symmetrical and those surfaces have the larger dimensions.

It should be appreciated that with the different wet film thicknesses it is easier to print with thicker layers of material and in addition, this makes it possible to utilize a smaller percentage of optically variable device flakes in the printing media. Thus with gravure it is possible to utilize only 25% by weight of optical variable device flakes whereas with letter press printing and other thinner coatings it is necessary to increase the percentage of optical variable device flakes to 45 to 50% by weight.

If a color shift between two colors with change of viewing angle such as a typical gold-to-green design is desired for an optically variable ink for anti-counterfeiting applications, a five layer symmetrical design of the type MDMDM where M is a metal layer and D is a dielectric layer. The materials used for M and D can be chosen from a wide variety of substances.

It has been possible to achieve very good color control with optically variable inks. To ascertain this optical variable inks were air brushed onto three different surfaces outlined below.

l. Hi-Gloss Paper

2. Bond Paper

3. Bond Paper With Water Base Base Coat

Delta E color measurements based on the CIE Lab color coordinate system were taken. Three samples were chosen to be standards against which all other samples were compared. The Delta E values are charted below:

| Sample # | Standard # High Gloss 1A | Bond no Base Coat 3A | Bond with Base Coat 5A |
|---|---|---|---|
| High 1A | -- | 6.18 | 3.39 |
| Gloss 2A | 1.62 | 5.36 | 2.56 |
| Paper 7B | 0.58 | 5.86 | 3.04 |
| 8B | 0.31 | 5.93 | 3.15 |
| Bond 3A | 6.14 | -- | 2.95 |
| Paper 4A | 4.61 | 2.06 | 2.20 |
| No B.C. 9B | 4.59 | 2.74 | 2.60 |
| 10B | 4.71 | 2.67 | 2.62 |
| Bond 5A | 3.34 | 2.87 | -- |
| Paper 6A | 3.53 | 2.59 | 0.56 |
| WB B.C. 11B | 2.96 | 3.38 | 0.78 |
| 12B | 1.74 | 4.41 | 1.80 |

The above chart taking the -- in Column IA as the standard can be seen that the change in color from the standard in terms of Delta E units is only I.62, .058 and 0.3I which shows that the difference in color from one sample to the next is minimal. For currency type paper, the color change is also very excellent ranging from 0.56 to 0.78 and I.80. The change in color is so small that for these samples it is undetectable by the human eye. It has been found that when the optical variable ink is applied to paper which does not have a base coat, then the values of delta E are slightly higher because the optically variable device flakes are not lying in a completely flat plane. By utilizing a base coat a more planar surface is provided which provides a surface that gives a higher color purity when the optically variable ink is applied to the same.

In using the yellow pigment blocker in the optically variable ink, the yellow pigment has a tendency to settle above the optically variable pigment since it has a specific gravity of approximately I with respect to the optical variable device flakes which have a specific gravity of approximately 3. In certain applications, however, the best approach in blocking out the blue reflected light at high viewing angles is to print a top coat vehicle containing the yellow pigment layer over the optically variable ink layer.

In order to achieve excellent color purity, the optically variable ink must have a good aspect ratio as, for example, at least two-to-one, preferably 5-I0 to one, as pointed out above. The optical variable device flakes should not be agglomerated but should be thoroughly dispersed throughout the ink. There should be good overlap of the flakes. The ink should have good flow characteristics. If the paper on which the printing is to occur has a rough surface, a subbing layer may be required for currency type applications where high color purity is desired. Alternatively, calendared currency paper may be very desirable to decrease surface roughness.

As also pointed out previously to obtain good optically variable ink durability, the vehicle itself must be durable and must meet press requirements. It must be able to post cure, i.e., it must be cross-linked after the print step. As also pointed out previously, air oxidization, catalyst and UV vehicles are available which cross-link after printing. The optically variable device flakes or particles which are provided as a part of the optically variable ink must be inert or alternatively, the flakes must be made oleophobic and hydrophobic or, in other words, they must be encapsulated so they will not react with chemicals such as bases or acids.

For a good quality gravure or Intaglio ink, the flakes or particle size should be in the range of 5-I5 microns. This particle size will allow the desired color purity while still allowing for fine line printing. If fine line printing is not desired, then larger size particles may be used, up to I00 microns or so. For coverage the flake or particle loading or flakes should range 30 to 50% by weight for letterpress and offset and I0 to 30% for gravure and Intaglio.

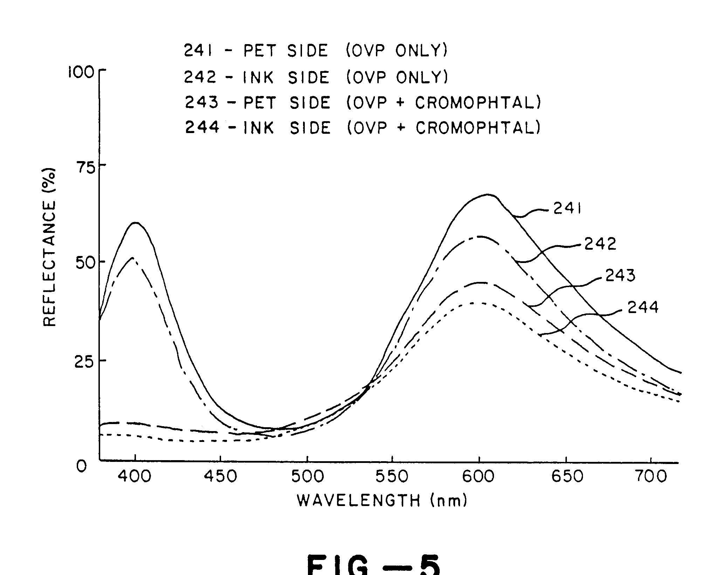

In the graph in Figure 3 there is shown the reflectance which can be obtained with a magenta-to-green shifter of the present invention. The curve 22I shows the spectrum of the foil and represents the reflectance of the coating on the polyester web. The curves 222 and 223 are of ink made from optically variable flakes made in accordance with the present invention from the foil which is represented by the curve 22I. The spectra of the ink were made from samples prepared from 20% by weight of optically variable pigment in Gotham 66908 resin catalyzed with 2.5% by weight Gotham 66909, cured at 200 for four minutes (Gotham Ink and Colors Co., Inc., Long Island City, New York lll0l). Curve 222 was obtained from ink prepared from flakes without any grinding (as removed from the web by solvent dissolving the hardcoat/release layer) whereas the other curve 223 was obtained from ink prepared from flakes that had been ground in methanol using ultrasonic dismemberment for l hour (Sonifier Cell Disruptor manufactured by Branson Sonic Power Co. set at a power setting of 9). The optical variable flakes in this grinding process were reduced to the size of approximately 5 to 20 microns. As can be seen from the curve 223, this grinding process had a very small deleterious effect on the reflectivity of the optically variable flakes. In addition, it can be seen that there is also very little degradation in the quality, including reflection, compared to the reflection received from the foil itself, before it is removed from the web.

In Figure 4, there is shown another graph giving the reflectance of a gold-to-green shifter of the present invention without the use of a blue-light blocker. As in the graph in Figure 3, the graph in Figure 4 has three curves 23l, 232, and 233 in which the curve 23l represents the reflection from the foil on the web, curve 232 represents the reflection from ink utilizing optical variable flakes obtained by removing the optically variable coating from the web by the use of a solvent but without any grinding and the curve 233 represents the reflection obtained from an ink using optical variable flakes which have been ground down to a particle size ranging from 5-20 microns. The inks were prepared in the same way as described in connection with the graph in Figure 3. Here again it can be seen that the reflectance from the inks is still very good and corresponds very closely to that of the foil itself in that there is little degradation by the grinding of the optically variable flakes to the l0-20 micron size. Note that the peak positions in wavelength for the optically variable ink correspond almost exactly to those for the optically variable coating as prepared on the vacuum roll coated web.

In Figure 5 there is shown still another graph which shows the reflectance of a gold-to-green ink shifter made in accordance with the present invention with and without the blue-light absorber. This ink was deposited onto a polyester clear film substrate. Curve 241 shows the reflectance from the PET side with an optical variable ink (OVI) utilizing optically variable flakes therein serving to provide a gold-to-green shifter without a blue-light blocker. Curve 242 shows the reflectance from the ink side of the same structure for which the reflectance is shown in curve 241. Curve 243 shows the reflectance from the PET side having a gold-to-green shifter utilizing a blue-light blocker. Curve 244 shows the reflectance from the ink side of the gold-to-green shifter shown in curve 243 using a blue-light blocker in yellow pigment. The ink utilized for the curves shown in Figure 5 was prepared with three grams of gold-to-green optical variable flakes which had been ultrasonically ground to 5-20 micron particle size. The optical variable flakes were then mixed with 7 grams of Del Val Thermoset varnish 5-X-2575 catalyzed with 10% Thermoset catalyst 5-X-2605 and cured at room temperature (Del Val Ink and Color, Inc., 1301 Taylor's Lane, Riverton, New Jersey 08077). The top two curves 241 and 242 show the reflectance as a function of wavelength when the ink is prepared and cast onto a polyester film and then viewed directly at the coating and also through the polyester film. The lower two curves are similar to those curves described above but are for inks prepared with 9.1% (by total weight) of the blue-light blocker (Cromophthal yellow pigment), optically variable flakes and the polymer vehicle. The Cromophthal yellow is manufactured by Ciba-Geigy, Glens Falls, New York. The curves 243 and 244 clearly show how the blue-light blocker in the form of the yellow pigment effectively blocks the blue light at 400 nanometers.

From the foregoing it can be seen that there has been provided an optically variable ink which can serve as a printing ink which can be applied to papers of various types including currency paper. This optically variable ink will exhibit two distinct colors, one color when it is viewed straight on or in a direction normal to the surface of the article on which the optically variable ink appears and another color when viewed at a substantial angle, as for example, 45°. This dramatic colour shift is achieved because of the use of a dielectric having a low index of retraction of 1.65 and below. Thus the paper which has an optically variable ink printed thereon can be readily examined by the human eye to ascertain whether or not an optically variable ink is present by merely ascertaining the color shift by change in viewing angle. Transparent pigments and dyes can be used to block out undesired colours in the spectrum between the two desired colors. They also can be used to block out undesired high angle colors. Further, these additives can be used to modify the colors wanted at the various viewing angles. In addition, the use of the optically variable ink makes it impossible to duplicate an article with the same colors on color copiers because only one color can be copied or because the optically variable ink reproduces as black rather than as a color or because the color (at normal incidence) is not faithfully reproduced.

Therefore it can be seen that optically variable inks made in accordance with the present invention have numerous applications. They can be utilized for various decorative purposes. They also can be utilized for anti-counterfeiting purposes in currency type papers, as well as security papers.

The optically variable ink is also advantageous in that it can be utilized with existing printing processes without alteration.

## Claims

1. An optically variable coating for providing a colour shift between two distinct colours at first and second angles of incident light, comprising a liquid vehicle and optically variable flakes disposed in the liquid vehicle, each of the optically variable flakes being comprised of a multilayer thin film structure having first and second planar surfaces extending parallel to the planes of the layers of the film structure, and a thickness which is measured in a direction perpendicular to the layers of the film structure; characterised in that the flakes have an aspect ratio of at least 2 to 1, between the largest dimension of said flakes parallel to the planes of the layers of the thin film structure and said thickness of the flakes perpendicular to the planes of the layers, the flakes being of symmetrical design and including metal reflector layers each having at least one period disposed on each surface thereof, each period being comprised of a layer with an index of refraction of 1.65 or less and a semi-opaque layer, and said flakes having a maximum dimension ranging from approximately 2 to 20 microns; and in that the liquid vehicle in which the optically variable flakes are disposed is a liquid ink vehicle.

2. A coating as claimed in Claim 1, characterised in that a transparent blocking pigment is dispersed in the ink vehicle for blocking out undesired colours.

3. A coating as claimed in Claim 2, characterised in that the blocking pigment blocks out undesired colours between the first and second angles of incident light.

4. A coating as claimed in Claim 2, characterised in that the blocking pigment blocks out undesired colours at angles of incidence higher than the second angle of incident light.

5. A coating as claimed in Claim 2, characterised in that said multilayer thin film structure provides a gold to green colour shift and characterised in that the blocking pigment is a yellow pigment.

6. A coating as claimed in any of the preceding claims, characterised in that said optical variable flakes constitute from 10 to 50% by weight of the ink.

7. A coating as claimed in any of the preceding claims, characterised in that said ink when applied as a wet film on full solid coated paper has a thickness ranging from 5 to 125 microns.

8. A method for producing an optically variable coating, providing a flexible web, depositing a release coat upon the flexible web, depositing an optically variable multilayer interference coating on the release coat, passing the web containing the release coat and the optically variable multilayer coating thereon into a solvent to dissolve the release coat, removing the optically variable multilayer coating from the web and causing the same to break into flakes having first and second parallel surfaces, drying the flakes, and dispensing the flakes in a liquid coating; characterised in that the flakes are subjected to an operation to reduce the size of the flakes so that the flakes have a maximum dimension ranging from approximately 2 to 20 microns and have an aspect ratio of at least 2 to 1 when measured in directions parallel and perpendicular to the first and second planer surfaces; and in that the flakes are introduced into a liquid ink vehicle to form an optically variable ink.

9. A method as claimed in Claim 8 together with the step of adding a transparent blocking pigment to the liquid vehicle so that the blocking vehicle in conjunction with the optically variable multilayer coating produces two distinct colours at two different angles of incident light.

10. A method as claimed in Claim 8 or Claim 9, characterised in that the variable flakes are sized by an air pulverizer.

## Revendications

1. Revêtement optiquement variable pour former un décalage de la couleur entre deux couleurs distinctes à un premier et un second angles de lumière incidente, comprenant un véhicule liquide et des lamelles optiquement variables disposées dans le véhicule liquide, chacune des lamelles optiquement variables étant constituée d'une fine structure pelliculaire multicouche comportant une première et une seconde surfaces planes s'étendant parallèlement aux plans des couches de la structure pelliculaire, et une épaisseur qui est mesurée dans une direction perpendiculaire aux couches de la structure pelliculaire, caractérisé en ce que les lamelles ont un rapport d'aspect d'au moins 2/1, entre la plus grande dimension desdites lamelles parallèle aux plans des couches de la fine structure pelliculaire et ladite épaisseur des lamelles perpendiculaire aux plans des couches, les lamelles étant d'une conception symétrique et comprenant des couches de réflecteur métallique comportant chacune au moins une période disposée sur chacune de ses surfaces, chaque période étant constituée d'une couche d'un indice de réfraction de 1,65 ou moins et d'une couche semi-opaque, et lesdites lamelles ayant une dimension maximale allant d'approximativement 2 à 20 microns, et en ce que le véhicule liquide dans lequel les lamelles optiquement variables sont disposées, est un véhicule pour encre liquide.

2.  Revêtement suivant la revendication 1, caractérisé en ce qu'un pigment de masquage transparent est dispersé dans le véhicule pour encre pour masquer des couleurs indésirables.

3.  Revêtement suivant la revendication 2, caractérisé en ce que le pigment de masquage masque des couleurs indésirables entre le premier et le second angles de lumière incidente.

4.  Revêtement suivant la revendication 2, caractérisé en ce que le pigment de masquage masque des couleurs indésirables à des angles d'incidence plus élevés que le second angle de lumière incidente.

5.  Revêtement suivant la revendication 2, caractérisé en ce que la fine structure pelliculaire multicouche confère un décalage de la couleur de l'or au vert et caractérisé en ce que le pigment de masquage est un pigment jaune.

6.  Revêtement suivant l'une quelconque des revendications précédentes, caractérisé en ce que les lamelles optiques variables constituent de 10 à 50 % en poids de l'encre.

7.  Revêtement suivant l'une quelconque des revendications précédentes, caractérisé en ce que l'encre, lorsqu'elle est appliquée sous la forme d'une pellicule humide sur du papier couché compact plein, a une épaisseur allant de 5 à 125 microns.

8.  Procédé de production d'un revêtement optiquement variable, consistant à prévoir une bande flexible, à déposer un revêtement anti-adhésif sur la bande flexible, à déposer un revêtement d'interférence multicouche optiquement variable sur le revêtement anti-adhésif, à faire passer la bande contenant le revêtement anti-adhésif et le revêtement multicouche optiquement variable sur celui-ci dans un solvant pour dissoudre le revêtement anti-adhésif, à enlever le revêtement multicouche optiquement variable de la bande et à diviser celui-ci en lamelles ayant une première et une seconde surfaces parallèles, à sécher les lamelles et à distribuer les lamelles dans un revêtement liquide, caractérisé en ce que les lamelles sont soumises a une opération réduisant leur taille de telle sorte que les lamelles aient une dimension maximale allant d'approximativement 2 à 20 microns et aient un rapport d'aspect d'au moins 2 à 1 lorsque mesuré dans des directions parallèle et perpendiculaire à la première et la seconde surfaces planes et en ce que les lamelles sont introduites dans un véhicule pour encre liquide pour former une encre optiquement variable.

9.  Procédé suivant la revendication 8, associe à l'étape d'addition d'un pigment de masquage transparent au véhicule liquide de telle sorte que le véhicule de masquage conjointement au revêtement multicouche optiquement variable produise deux couleurs distinctes à deux angles différents de lumière incidente.

10. Procédé suivant l'une ou l'autre des revendications 8 et 10, caractérisé en ce que les lamelles variables sont dimensionnées par un pulvérisateur d'air.

**Patentansprüche**

1.  Optisch variable Beschichtung für die Herbeiführung einer Farbverschiebung zwischen zwei unterschiedlichen Farben bei einem ersten und einem zweiten Winkel des einfallenden Lichts, welche einen flüssigen Träger und optisch variable Flocken aufweist, die in dem flüssigen Träger angeordnet sind, wobei jede der optisch variablen Flocken einen mehrschichtigen Dünnfilmaufbau hat, der eine erste und eine zweite planparallele Oberfläche, die sich parallel zu den Ebenen der Schichten des Filmaufbaus erstrecken, und eine Dicke aufweist, die in eine Richtung senkrecht zu den Schichten des Filmaufbaus gemessen wird, dadurch gekennzeichnet, daß die Flocken ein Längenverhältnis von wenigstens 2 zu 1 zwischen der größten Abmessung der Flocken parallel zu den Ebenen der Schichten des Dünnfilmaufbaus und der Dicke der Flocken senkrecht zu den Ebenen der Schichten haben, wobei die Flocken eine symmetrische Auslegung aufweisen und Metallreflektorschichten einschließen, von denen jede wenigstens einen auf jeder Oberfläche davon angeordneten Abschnitt hat, wobei jeder Abschnitt eine Schicht mit einem Brechungsindex von 1,65 oder weniger und eine semiopake Schicht aufweist, und wobei die Flocken eine maximale Abmessung haben, die von annähernd 2 bis 20 Mikron reicht, und daß der flüssige Träger, in welchem die optisch variablen Flocken angeordnet sind, ein flüssiger Farbenträger ist.

2. Beschichtung nach Anspruch 1, dadurch gekennzeichnet, daß in dem Farbenträger zum Aussperren unerwünschter Farben ein transparentes Sperrpigment dispergiert ist.

3. Beschichtung nach Anspruch 2, dadurch gekennzeichnet, daß das Sperrpigment unerwünschte Farben zwischen dem ersten und zweiten Winkel des einfallenden Lichts aussperrt.

4. Beschichtung nach Anspruch 2, dadurch gekennzeichnet, daß das Sperrpigment unerwünschte Farben bei Einfallswinkeln aussperrt, die höher als der zweite Winkel des einfallenden Lichts sind.

5. Beschichtung nach Anspruch 2, dadurch gekennzeichnet, daß der mehrschichtige Dünnfilmaufbau eine Farbverschiebung von Gold zu Grün erzeugt, und dadurch gekennzeichnet, daß das Sperrpigment ein gelbes Pigment ist.

6. Beschichtung nach einem der vorhergehenden Ansprüche, dadurch gekennzeichnet, daß die optisch variablen Flocken von 10 bis 50 Gewichtsprozent der Farbe bilden.

7. Beschichtung nach einem der vorhergehenden Ansprüche, dadurch gekennzeichnet, daß die Farbe, wenn sie als nasser Film auf volles massives beschichtetes Papier aufgebracht ist, eine Dicke im Bereich von 5 bis 125 Mikron hat.

8. Verfahren zur Herstellung einer optisch variablen Beschichtung durch Bereitstellen einer flexiblen Bahn, durch Ablegen einer Löseschicht auf der flexiblen Bahn, durch Ablegen einer optisch variablen mehrschichtigen Interferenzbeschichtung auf der Löseschicht, durch Führen der die Löseschicht und die optisch variable mehrschichtige Beschichtung darauf enthaltenden Bahn in ein Lösungsmittel zum Auflösen der Löseschicht, durch Entfernen der optisch variablen mehrschichtigen Beschichtung von der Bahn und durch Veranlassen der Bahn, in Flocken aufzubrechen, die eine erste und eine zweite parallele Oberfläche haben, durch Trocknen der Flocken und durch Verteilen der Flocken in einer flüssigen Beschichtung, dadurch gekennzeichnet, daß die Flocken einem Vorgang unterworfen werden, um die Größe der Flocken so zu reduzieren, daß die Flocken eine maximale Abmessung, die von annähernd 2 bis 20 Mikron reicht, und ein Längenverhältnis von wenigstens 2 zu 1 haben, wenn in Richtungen parallel und senkrecht zu der ersten und zweiten planparallelen Oberfläche gemessen wird, und daß die Flocken in einen flüssigen Farbenträger eingeführt werden, um eine optisch variable Farbe zu bilden.

9. Verfahren nach Anspruch 8 zusammen mit dem Schritt der Zugabe eines transparenten Sperrpigments zu dem Flüssigkeitsträger derart, daß der sperrende Träger in Verbindung mit der optisch variablen mehrschichtigen Beschichtung zwei unterschiedliche Farben bei zwei verschiedenen Winkeln des einfallenden Lichts erzeugt.

10. Verfahren nach Anspruch 8 oder Anspruch 9, dadurch gekennzeichnet, daß die variablen Flocken durch einen Luftpulverisator auf ihre Größe gebracht werden.

OVI PROCESS

CONVERTING

| COAT RAW WEB WITH POLYMER | ~201 |

VACUUM
COATING

| DEPOSIT OVD ONTO WEB | ~202 |

OVI
PROCESSING

| REMOVE OVD, SIZE INTO FLAKE AND FORMULATE INTO INK | ~203 |

APPLICATION

| PRINTING PRESS | ~204 |

# FIG.—I

OVI MANUFACTURING PROCESS

206
PREPARE COATED WEB

207
VACUUM ROLL COAT THIN FILM COATING

208
SLIT TO REMOVE TRIM

209
EDIT

211
STRIP FLAKES FROM WEB

212
FILTER AND DRY FLAKES

213
SIZE AND BLEND FLAKES

214
MIX AND MILL INK

217
SHIP INK

215
SIZE BLOCKING PIGMENT

INK VEHICLES
SOLVENTS
ADDITIVES

BLOCKING PIGMENT

# FIG.—2

11

221 - FOIL
222 - INK (PARTICLES = 25 - 200 MICRONS)
223 - INK (PARTICLES = 5 - 20 MICRONS)

FIG. — 3

231 - FOIL
232 - INK (PARTICLES = 25 - 200 MICRONS)
233 - INK (PARTICLES = 5 - 20 MICRONS)

FIG. — 4

12

241 - PET SIDE (OVP ONLY)
242 - INK SIDE (OVP ONLY)
243 - PET SIDE (OVP + CROMOPHTAL)
244 - INK SIDE (OVP + CROMOPHTAL)

FIG.—5